(19) Europäisches Patentamt
European Patent Office
Office européen des brevets

(11) **EP 3 640 454 A1**

(12) **EUROPEAN PATENT APPLICATION**

(43) Date of publication:
22.04.2020 Bulletin 2020/17

(51) Int Cl.:
*F02C 7/232* (2006.01)      *F02C 9/26* (2006.01)

(21) Application number: 19197543.2

(22) Date of filing: 16.09.2019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 16.10.2018  GB 201816822

(71) Applicant: **Rolls-Royce plc**
**London N1 9FX (GB)**

(72) Inventor: **Griffiths, Michael**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **FUEL METERING SYSTEM**

(57)     The invention provides a fuel metering system for a gas turbine engine, the fuel metering system comprising: a fuel supply line; a fuel metering valve configured to pass an amount of fuel received from the fuel supply line to the gas turbine engine; an engine control unit configured to control the position of the fuel metering valve according to a demanded fuel flow to the gas turbine engine; a flow sensor configured to provide a measurement of a flow of fuel in the fuel metering system; wherein the engine control unit is further configured to determine a fuel flow to the gas turbine engine based upon the measurement from the flow sensor; and wherein the engine control unit is further configured to identify a loss of fuel flow control by comparing the demanded fuel flow to the determined fuel flow to the gas turbine engine.

Fig. 7

EP 3 640 454 A1

## Description

The present disclosure relates to fuel metering systems, such as those used in aviation gas turbine engines.

## Background

In modern aircraft, un-commanded high engine thrust (UHT) is a concern. It is desirable to rapidly detect and accommodate a UHT event. Engine shut down is a limited option and is only really an option on the ground. In-flight (and in some cases, on the ground as well), if one engine is shut down because of a UHT event, an aircraft can experience gross asymmetric thrust. Therefore, it is preferable to have a system capable of rapidly detecting a UHT threat and subsequently able to maintain and control the fuel flow to the engine, thereby controlling engine thrust.

It is an aim of the present disclosure to at least partially address the problems discussed above.

## Brief Summary

According to a first aspect of the disclosure there is provided a fuel metering system for a gas turbine engine, the fuel metering system comprising one or more of: a fuel supply line; a fuel metering valve configured to pass an amount of fuel received from the fuel supply line to the gas turbine engine; an engine control unit configured to control the position of the fuel metering valve according to a demanded fuel flow to the gas turbine engine; a flow sensor configured to provide a measurement of a flow of fuel in the fuel metering system; wherein the engine control unit is further configured to determine a fuel flow to the gas turbine engine based upon the measurement from the flow sensor; and wherein the engine control unit is further configured to identify a loss of fuel flow control by comparing the demanded fuel flow to the determined fuel flow to the gas turbine engine.

Optionally, the engine control unit is configured to identify a loss of fuel flow control when the fuel flow measured by the flow sensor exceeds the demanded fuel flow by a threshold amount.

Optionally, the fuel metering system further comprises: a spill line configured to receive excess fuel from the fuel supply line; and a spill valve provided in the spill line and configured to control the flow of fuel through the spill line.

Optionally, the engine control unit is further configured to limit closure of the spill valve in response to identifying a loss of fuel flow control.

Optionally, the fuel metering system further comprises a servo-valve associated with the spill valve, and wherein the engine control unit is configured to control the position of the spill valve via the servo-valve.

Optionally, the engine control unit is further configured to close the fuel metering valve in response to identifying a loss of fuel flow control.

Optionally, the fuel metering system further comprises a pump supplying fuel to the fuel supply line.

Optionally, the spill line is configured to receive the excess fuel from the fuel supply line and deliver it back to the pump.

Optionally, the system is configured such that fuel not passed by the fuel metering valve to the gas turbine engine is received by the spill line as the excess fuel.

Optionally, the flow sensor is configured to measure a flow of fuel downstream of the fuel metering valve.

Optionally, the flow sensor comprises a passive flow sensing valve configured to directly measure the downstream flow of fuel from the fuel metering valve. Optionally, the flow sensor comprises a position sensor configured to determine the position of a valve downstream of the fuel metering valve.

Optionally, the flow sensor is configured to measure a flow of fuel upstream of the fuel metering valve.

Optionally, the flow sensor is configured to measure the fuel flow in the spill line.

According to second aspect of the disclosure, there is provided a method of operating a fuel metering system for a gas turbine engine, the method comprising the steps of: controlling supply of fuel to a gas turbine engine according to a demanded fuel flow; taking a measurement of a flow of fuel in the fuel metering system; determining a flow of fuel to the gas turbine engine based upon the measurement; and comparing the demanded fuel flow to the determined fuel flow.

Optionally, the method comprises the step of limiting a maximum fuel flow to the gas turbine engine in response to identifying that the determined fuel flow exceeds the demanded fuel flow by more than a threshold amount.

Optionally, the step of limiting comprises limiting the closure of a spill valve in a spill line receiving excess fuel from the fuel supply line.

Optionally, the step of limiting comprises closing a fuel metering valve controlling the supply of fuel to the gas turbine engine.

Optionally, the fuel metering system is a system according to the first aspect described above.

According to a third aspect of the disclosure, there is provided a gas turbine engine for an aircraft comprising: an engine core comprising a turbine, a compressor, and a core shaft connecting the turbine to the compressor; a fan located upstream of the engine core, the fan comprising a plurality of fan blades; a gearbox that receives an input from the core shaft and outputs drive to the fan so as to drive the fan at a lower rotational speed than the core shaft; and a fuel metering system according to the first aspect described above.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). In some implementations, the fan diameter may be less than around 130 cm (around 50 inches). The fan diameter may be in an inclusive range bounded by any two of the values in the previous sentence (i.e.

the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 $Nkg^{-1}$s, 105 $Nkg^{-1}$s, 100 $Nkg^{-1}$s, 95 $Nkg^{-1}$s, 90 $Nkg^{-1}$s, 85 $Nkg^{-1}$s or 80 $Nkg^{-1}$s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a flow diagram of a fuel pumping unit and fuel metering unit;

Figure 5 is a flow diagram of engine control loops;

Figure 6 is a flow diagram of a fuel metering system;

Figure 7 is a flow diagram of a fuel metering system;

Figure 8 is a flow diagram of a fuel metering system;

Figure 9 is a diagram of a fuel system incorporating a splitter and drain unit; and

Figure 10 is a diagram of a modification of the fuel system of Figure 9.

**Detailed Description**

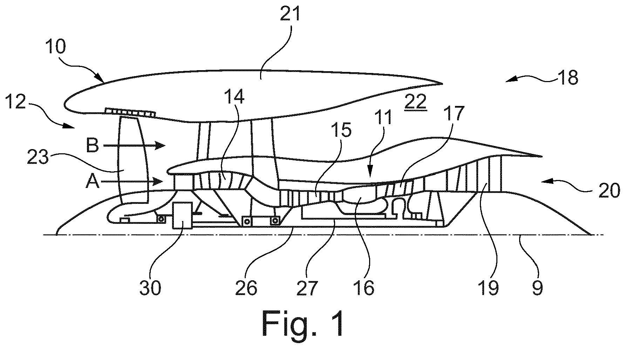

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

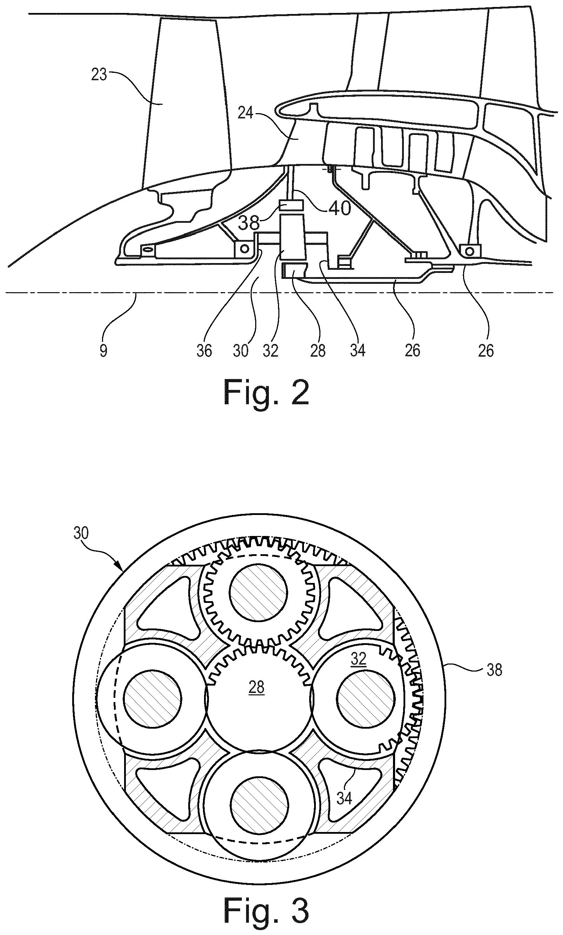

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

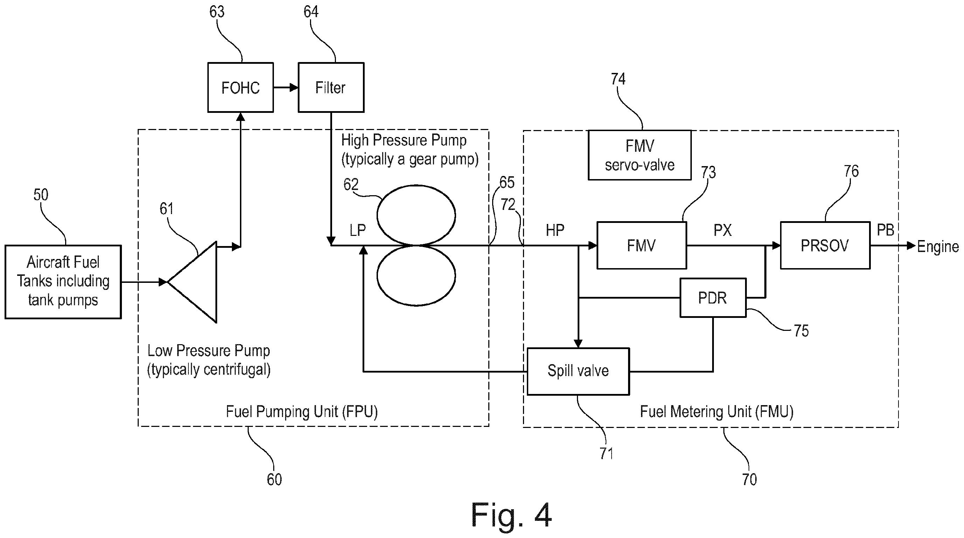

Figure 4 shows a schematic diagram of a conventional gas turbine engine fuel control system. The system is broadly divided into a fuel pumping unit (FPU) 60 and a fuel metering unit (FMU) 70.

As shown in Figure 4, fuel from aircraft tanks 50 is pumped via engine tank pumps to the FPU 60. The FPU 60 typically comprises a low pressure (LP) pump 61 followed by a high pressure (HP) pump 62. The FPU 60 is typically mounted on the accessory gearbox (AGB) with the LP and HP pumps 61, 62 driven off the gearbox at a fixed ratio of engine shaft speed. The LP pump 61 pressurises the fuel before it passes to the downstream HP pump 62 via a fuel oil heat exchanger (FOHE) 63 and a main engine filter 64. The LP stage 61 is capable of handling the low inlet pressures and multiphase flow that will be presented to the fuel pump with failed airframe tank pumps; it is designed to generate sufficient pressure to ensure that, even with high inter-stage losses which will occur if the filter 64 and FOHE 63 are running on bypass, the HP gear stages 62 are not starved of flow. In other words the LP pump 61 helps prevent cavitation at the HP gear pump 62 inlet.

The HP pump 62 is usually a fixed displacement pump, and so it delivers a fuel flow proportional to its speed of rotation. The pump 62 is sized to deliver a flow that exceeds the burner flow requirement of the engine at all operating conditions. Any surplus flow is spilled back to HP pump 62 inlet via the spill valve (SV) 71 in the FMU 70. Total HP pump 62 delivery flow passes from the FPU outlet 65 to the FMU inlet 72.

On entering the FMU 70 the total flow from the HP pump 62 is split. The required burner flow passes through a fuel metering valve (FMV) 73, and any excess or surplus flow passing through the SV 71 back to HP pump 62 inlet, or to provide servo flow to actuation systems for engine variable geometry (such as Variable Stator Vane Actuators).

Normal fuel metering is achieved via the valves of the FMU 70 - i.e. the FMV 73 and SV 71. FMV 73 is moved via servo flow from an associated servo-valve 74 to vary the opening of a flow metering port. The pressure drop across the metering port can be controlled to a nominally constant value via a pressure drop regulator (PDR) 75 and the SV 71. The PDR 75 senses any change in the FMV 73 pressure drop and adjusts a servo orifice to vary the servo flow to the SV 71 so that the SV 71 moves to restore the FMV 73 pressure drop by adjusting the amount of excess flow from the HP pump 62 which is spilt back to pump inlet.

Thus, in normal operation, metered flow to the engine 10 is essentially a function of FMV 73 position. The FMV 73 position can be sensed by an appropriate position sensor and fed back to the electronic engine control (EEC) to facilitate so-called inner loop (i.e. fuel system level - see discussion below) control of FMV 73 position.

Downstream of the FMV 73, flow passes through a pressure raising shut off valve (PRSOV) 76 before exiting the FMU 70 and passing to the engine burners via a delivery line and burner manifold. Typically, the PRSOV 76 comprises a piston moveable within a sleeve to control the opening of a flow port that connects the FMV 73 outlet line to the downstream burner delivery line. One side of the piston is exposed to downstream metering valve pressure and the other side has a spring load acting on it and also a reference pressure set by an associated shut off valve servo-valve (SOVSV - not shown).

In normal operation, a low pressure supply is ported to the spring side of the PRSOV 76. The valve will only open against this pressure and the spring load, to allow flow to the burners, once a certain level of pressure is achieved on the upstream side, downstream of the FMV. In 'shut off' mode, the SOVSV is energised to port HP fuel to the spring side of the PRSOV 76 so that the valve closes to provide a drip tight seal, closing off fuel flow to the engine 10.

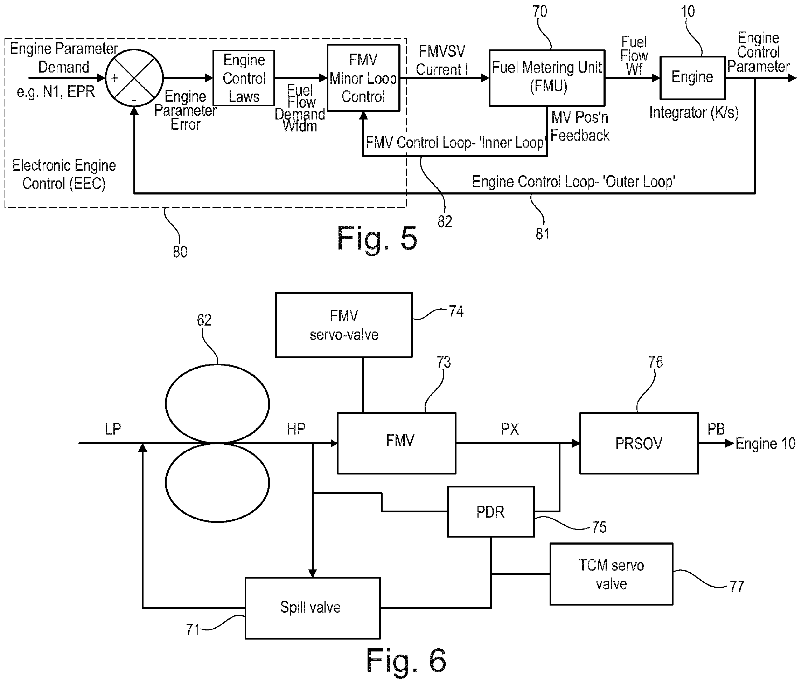

The conventional fuel control described above has limited capability for detecting or accommodating an un-commanded high engine thrust (UHT). This is explained by considering the typical fuel control loops associated with the FMU 70, which are shown schematically in Figure 5.

FMV 73 position is controlled by an EEC 80. The EEC controls a slow outer control loop 81 and a fast inner control loop 82.

The outer engine loop 81 sets a demand on an engine control parameter (for example, fan speed (N1) or engine pressure ratio (EPR), responding to changes set by the pilot's throttle. The demanded value for the engine parameter is compared to an actual measured value and the resultant error signal is converted into a fuel flow demand by the EEC 80.

The fuel flow demand is the input to the minor or inner control loop 82. This is converted into a FMV 73 demanded position which is compared to the actual FMV 73 position, as measured by an appropriate position sensor. FMV 73 position error is used to generate a current to drive the FMV servo-valve 74 which in turn drives the FMV 73 to its demanded position as previously described. As the FMV 73 moves to its demanded position, flow to the engine 10 changes and the engine 10 responds, the engine parameter under outer loop control 81 changing to meet the outer loop 81 demand.

The inner loop 82 response (FMV 73 control) is much faster than the outer loop 81 response. This is because the latter relies on the engine 10 to respond before the engine control parameter can change.

As a result, in the event of a failure internal to the FMU 70, causing an un-commanded increase in fuel flow to the burners, this system relies on a change in the engine control parameter to detect the potential UHT threat. That means UHT threat detection is slow.

Further, the only subsequent action which can be taken is to shut down the engine via the SOVSV and PRSOV. That means options for UHT accommodation are limited. Engine shut down is a limited option and is only really applicable on the ground. In-flight (and in some cases on the ground as well), slow detection of a UHT event on one engine can lead to the aircraft experiencing gross asymmetric thrust. With limited aircraft rudder authority/response this can be hazardous, particularly at low altitude conditions such as approach to a runway.

Once detected, shut down of an engine 10 experiencing UHT can itself lead to the aircraft experiencing gross asymmetric thrust, particularly if the aircraft rudder has been adjusted in an attempt to compensate for the UHT - sudden shut down of the engine can result in asymmetric thrust caused by a combination of having one functional engine and an incorrectly positioned rudder.

Figure 6 presents a UHT protection system. In this system, normal fuel metering is achieved via the valves of the FMU 70.

As in Figure 4, FMV 73 of Figure 5 is moved via servo flow from an associated servo-valve 74 to vary the opening of a flow metering port. The pressure drop across the metering port is controlled to a nominally constant value via the PDR 75 and the SV 71. The PDR 75 senses any change in the FMV 73 pressure drop and adjusts a servo orifice to vary the servo flow to the SV 71. This causes the SV 71 to move to restore the FMV 73 pressure drop by adjusting the amount of excess flow from the HP pump 62 that is spilt back to pump inlet. Thus, in normal operation, metered flow to the engine 10 is essentially a function of FMV 73 position. That position is sensed by an appropriate position sensor and fed back to the EEC 80 to facilitate inner loop 82 (i.e. fuel system level) control of FMV 73 position.

In the event of a FMV 73 fault (e.g. upward runaway of the FMV 73 or a jammed FMV 73), an overthrust threat is detected via the engine control loop (outer loop 81) which senses a change in an engine parameter. The EEC 80 then acts to energise a thrust control malfunction (TCM) servo-valve 77 which moves to vent the SV 71 servo pressure back to HP pump 62 inlet pressure (LP). This opens the SV 71 to increase spill flow and simultaneously reduces flow through the FMV 73 to the burners. Thus the level of overselling /overthrust is limited.

Similarly, in the event of an overthrust threat caused by a jammed SV 71 (too far closed), this can be sensed by the outer control loop and accommodated by the EEC 80 closing the FMV 73.

In both of the above scenarios, the main drawback is the slow speed of response. The slow outer control loop 81 has to wait for a change in a key engine parameter to first detect and then accommodate a potential UHT threat. The measured engine parameter provides the feedback signal to the EEC 80 in TCM control mode. Consequently, an appreciable increase in thrust can occur before the burner flow is pulled back.

There are other ways of achieving control to avoid UHT. Many of these suffer from the same issue, their response to an upward runaway of the FMV or a jammed FMV/SV or an incorrect/lost FMV position signal being slow because of their reliance on the slow outer engine control loop 81.

Thus, the systems described above are limited in their ability to meet UHT detection and accommodation requirements on modern engines. Detection via the outer loop 81 is slow (the engine 10 can reach an unacceptable level of overthrust before action is taken) and accommodation by shutting down the engine 10 can exacerbate the UHT problem.

Therefore, it is preferable to have a system capable of rapidly detecting a UHT threat and, before it manifests to any significant extent at engine level, that is subsequently able to maintain control the fuel flow to the engine, thereby controlling engine thrust. This can be achieved by providing a direct or inferred measurement of burner flow which can be used by the fast inner loop 82, as set out below. Preferably, any measurement device used to provide that measurement should be sufficiently responsive so as to not compromise the dynamic capability of the loop to control burner flow. In other words, the dynamic capability of the flow measurement device is preferably faster than that of the engine to provide a benefit in detection speed.

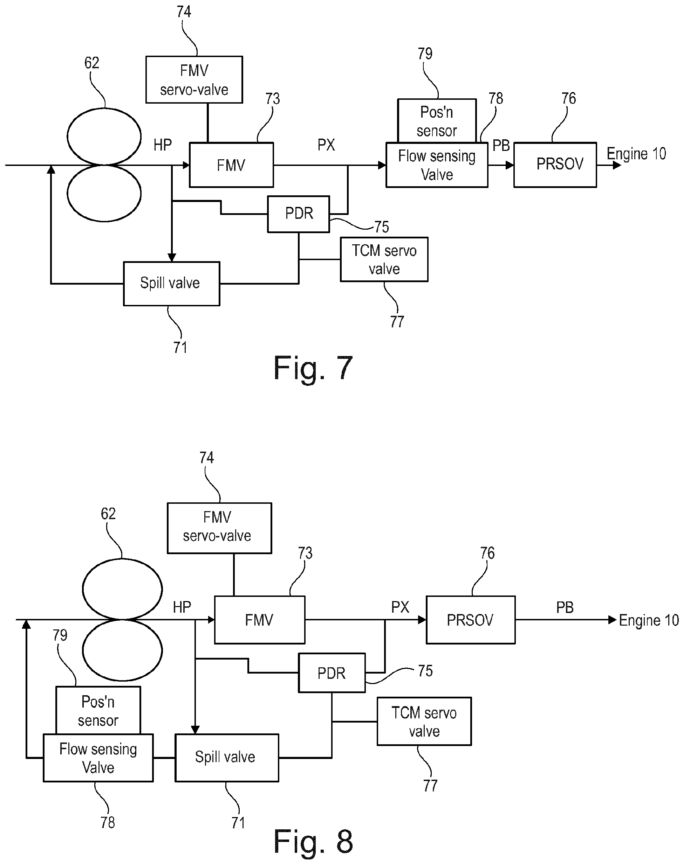

Figure 7 shows an arrangement where a flow sensing device 78 is located in the main flow line to the burners. In general, the device 78 can be downstream of the FMV 73 in the FMU 70 (as shown) or upstream of the FMV 73 in the FMU 70 or downstream of the FMU 70 in a separate body.

In Figure 7, the flow measuring device 78 is shown as a flow sensing valve (FSV) 78. The FSV 78 in Figure 7 incorporates a position sensor 79. However, the FSV 78 can take several different forms as long as it provides a measure of flow. Possible options for the FSV 78 include:

- a flowmeter e.g. a turbine flow meter, provided it is sufficiently responsive;
- an orifice plate arrangement, using an orifice of known size with a pressure drop sensor across it, from which flow can be computed from the area of the orifice and the pressure drop across it;
- a single stage flow sensing valve; and
- a two stage flow sensing valve.

A single stage flow sensing valve can comprise a piston in a sleeve with a spring at one end of the piston. Inlet fuel flow can be fed into the non-spring end of the valve and pass by a metering edge on the piston through a flow profile cut into the sleeve. Thus, the non-spring end of the piston is exposed to high inlet pressure while the spring chamber is flooded, with lower pressure from downstream of the profile. As flow increases, the piston moves to open the exposed area of the profile. A position sensor is used to detect piston position, the measured position being a measure of flow passing through the flow profile.

A two stage flow sensing valve can be considered as a two stage version of the single stage valve. A first stage piston can sense the pressure drop across a flow profile cut into a second stage sleeve and balances it against a first stage spring load. The first stage piston pilots a second stage piston which moves to vary the flow area of the flow profile. High upstream pressure acts at the flowing end of the second stage piston whilst the other end is exposed to a secondary spring load and servo pressure. An orifice potentiometer, formed by a fixed first orifice and a second orifice variable with position of the pilot stage piston, can take fuel pressure from upstream of the FSV, and returns flow to downstream of the FSV. The intermediate servo pressure between the two restrictions can act at the spring end of the second stage piston. When flow through the flow profile changes, the pressure drop across it changes. This is sensed by the first stage piston which moves to vary the restriction of the variable orifice. This disturbs the servo flow balance across the potentiometer arrangement such that there is a net flow into/out of the second stage servo chamber. This displaces the second stage piston to vary the flow profile area until the profile pressure drop is restored. In other words, the first stage senses and maintains a nominally constant pressure drop across the flow profile by piloting the second stage piston. As flow increases, the second stage piston moves to open the flow area of the profile so that piston position, measured by an appropriate position sensor is a measure of flow.

A two stage FSV 78 might have a bandwidth of around 4 Hz. A single stage FSV 78 bandwidth can be significantly higher, for example greater than 10 Hz. In general a flow sensor 78 for use in the invention preferably has a bandwidth of more than 0.5 Hz, more preferably more than 0.75 Hz, still more preferably more than 1 Hz, still more preferably more than 2 Hz, and still more preferably greater than or equal to 4 Hz.

In any case, whatever form of flow sensing device 78 is used, it plays no role in setting the metered flow to the engine in normal conditions. It is simply a "passive" device, monitoring the metered flow which is typically set by the FMV 73. That is, although the device may include moving parts (as described in options above) it is "passive" in the sense of only reacting to the flow and pressure conditions around it, and not being directly controlled by a signal from the EEC 80.

A FMV servo-valve 74 can provide servo flow to either end of the FMV 73. The FMV 73 can comprise a piston moveable in a sleeve with a metering edge to vary the opening of a metering profile cut into its sleeve. Varying the input current to the FMV servo-valve 74 varies the servo flow to the FMV 73 so that FMV 73 moves to change the area of the metering profile exposed to fuel flow. The pressure drop across the metering port can be controlled to a nominally constant value by the PDR 75 and SV 71, as has been discussed in connection with previous figures. That is, the PDR 75 can sense the FMV 73 pressure drop and adjusts a servo orifice to vary the servo flow to the SV 71, so that the SV 71 moves to adjust the amount of excess flow from the HP pump 62 which is spilt back to the pump inlet. Thus, in normal operation, metered flow to the engine 10 is essentially a function of FMV 73 position, the latter being sensed by an appropriate position sensor and fed back to the EEC 80 to facilitate inner loop 82 control of FMV 73 position.

By directly measuring the metered flow, the FSV 78 provides an accurate and rapid means of detecting any fault where the actual metered flow significantly exceeds the demanded flow, for example. A threshold amount between the actual flow and the demanded flow may be set, to trigger a control response. In other words, the flow measurement feedback signal can be used by the EEC 80 to identify a potential UHT threat. If the threshold difference is passed, this can be detected by the fast EEC inner loop control 82, without relying on the slow outer engine control loop 81 to detect a change in an engine parameter. The threshold difference between the actual flow and the demanded flow amount may be a negative amount or a positive amount and may vary with engine condition including during engine transients. The threshold may be set at some absolute difference or percentage amount difference compared to the determined flow.

A high measured flow, in comparison to the demanded flow, can be indicative of a loss of fuel flow control. That may be caused by an upward runaway/jamming of the FMV 73 (i.e. a loss of position control that tends to open the FMV 73 and increase burner flow) or downward failure/jamming of the SV 71 (i.e. closure of the SV 71 spill ports, resulting in an increase in burner flow). FMV 73 position faults may be caused by a failure of the FMU 70 mechanical valves or by an EEC 80 drive circuit fault.

Upon detection of a high burner flow, in comparison to the demanded flow, the EEC 80 can switch into TCM fuel control mode. The EEC 80 may attempt to close the FMV 73 as the fault may be due to the SV 71 being in too closed a position (low spill flow, high burner flow). Alternatively, if flow does not decrease as a result of attempting to close the FMV 73 (in this case, the cause of the high burner flow is a loss of control of the FMV 73), the TCM servo-valve can be energised to vent SV 71 servo pressure back to a low pressure source (typically HP pump 62 inlet pressure) so that the SV 71 opens to increase spill flow, thereby reducing/limiting the burner flow.

In either case, the EEC 80 can maintain control of the metered flow either by modulating the FMV (in the case of as spill valve failure) or by modulating the spill valve (in the case of an FMV failure). As such, the level of overfuelling/overthrust is limited and closed loop control is achieved using the fast inner control loop 82 via the EEC 80, the FSV 78 providing a flow feedback signal. This means there is no reliance on the slower outer/engine control loop 81 to provide a feedback signal for flow control. That is, burner flow continues to be controlled by the inner loop with the outer loop not having TCM related control components in its algorithms. In other words, the outer loop will continue to try to control according to normal operation, so will still be required for engine control, but UHT can be controlled by the inner loop.

In summary, closed inner loop control can be achieved for any fault where the burner flow is significantly higher than demand. The fault may be caused by, amongst others: FMV 73 upward failure, position known or unknown; FMV 73 being jammed; incorrect FMV 73 position measurement; SV 71 downward failure; or SV being jammed too far closed.

In a non-UHT scenario, the scheme also offers the potential to partially accommodate any jamming of the FMV 73 or SV 71. Should the FMV 73 jam, closed loop flow control can be achieved by modulating the SV 71 via the TCM servo-valve 77, using the FSV 78 for inner loop flow feedback. Here, the maximum achievable burner flow may be limited by a pump pressure relief valve (PPRV - not shown). The PPRV will open to spill pump delivery flow back to pump inlet should the increase in flow through the FMV 73 (as the SV 71 closes) raise the system pressure to a level above the PPRV cracking point. Similarly, should the SV 71 jam, closed loop control can be achieved by modulating the FMV 73 via its servo-valve 74, again using the FSV 78 for flow feedback. In this case, the maximum achievable flow may be limited at the maximum FMV 73 opening for a given position of the failed SV 71.

Figure 8 shows an alternative arrangement in which the FSV 78 is located in the spill return line to monitor spill flow. In this arrangement, the EEC 80 can compute burner flow from pump speed and spill flow measurement, approximating pump and FMU leakage from burner flow demand, pump speed and combustion chamber pressure measurements. Alternatively, the system can be run at a condition where the burner flow is zero (e.g. the normal scenario during engine spool-up prior to commencing delivery of burner flow to the engine for light-up), to compute combined leakage of the pump 62, FMU 70 and any other component between pump outlet and inlet pressure, for use in later pump health monitoring. In any case, a burner flow indicative of the health of the pump 62 is given by:

Burner Flow = Net pump flow – Spill Flow – FMU (& other component) leakage

Comparing demanded flow to calculated burner flow, the EEC 80 can detect a 'high' flow fault and limit it through fast inner loop control of the FMV 73 or SV 71 control as described above.

Compared to the Figure 7 arrangement, the Figure 8 arrangement may have some drawbacks in certain scenarios. It may be less accurate because it does not directly measure the burner flow, relying instead on a calculated approximation. Similarly, the inner loop 82 response may be slower, as burner flow has to be calculated from a number of other signals. However, the benefit of this arrangement is that the FSV 78 can be used for direct measurement of the spill flow. This can provide a direct measurement of pump health; as the pump wears, spill flow at any given condition will decrease.

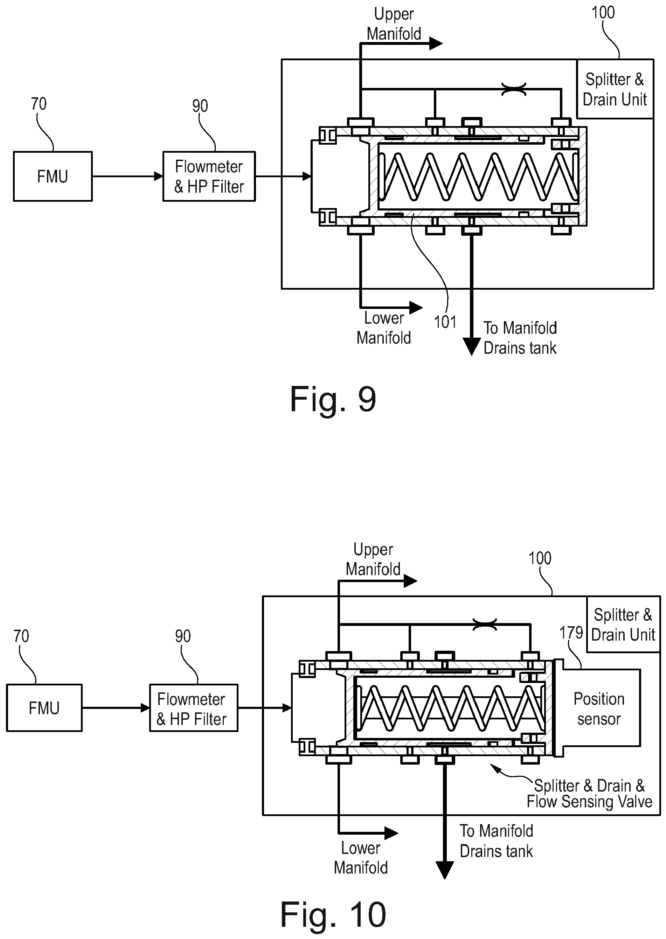

Figures 9 and 10 relate to another alternative arrangement that could be employed if there are difficulties associated with installation of the FMU 70 on the engine 10.

This might occur, for example, if the additional UHT protection functionality within the FMU cannot be accommodated in the space available. An additional TCM servo-valve 77 and FSV 73 downstream of the metering valve could cause such issues in some engines. In any case, the relative positions of the burner manifold supplying fuel the engine 10 burners, the FMU 70 and manifold drains tank are important and can impose installation constraints.

As mentioned above, the position of the FSV 73 can vary. As such, it can be downstream of the PRSOV 76, and the functionality could be integrated into any flow throttle by adding a position sensor. An example of such an arrangement is a use in a flow splitter valve, used for distributing fuel between manifolds.

A schematic view of such a system is shown in Figure 9, in which it can be seen that between FMU 70 and the splitter and drain valve unit 100, there may also be a flowmeter and HP filter 90. This flowmeter is of the highly accurate type for measuring the total fuel supplied to the engine for data gathering purposes. However, technologies suitable for the engine environment, and that can provide sufficient accuracy for this flowmeter, typically cannot also provide sufficiently high bandwidth for fuel metering. For example, a two stage FSV 78 might have a bandwidth of around 4 Hz. A single stage FSV 78 bandwidth can be significantly higher, for example greater than 10 Hz. A conventional engine flow meter bandwidth is around 0.5 Hz.

Further, as shown in Figure 10, a position sensor 179 can be added to the splitter/drain valve 100 so that it can also be used as a flow sensing device in an analogous manner to the FSV 78 in Figures 7 and 8. The piston 101 senses upstream pressure and upper manifold pressure (i.e. downstream valve pressure, the same as lower manifold), so piston 101 position can be used to infer a measure of burner flow, operating as a fast acting flow sensing device downstream of the FMV 73 that can be used for control in an analogous manner to the FSV 78 of Figure 7. This also further simplifies size reduction of the FMU 70 as the FSV 78 of the other arrangements can be omitted because the functionality of the splitter/drain valve 100 is extended to provide a flow sensing function instead. However, the arrangements of Figure 7 or Figure 8 may be preferable if the splitter & drain unit 100 is located in a hot region, e.g. close to the burner ring, which may not be suitable conditions for the position sensor 79 and associated wiring.

In summary, the various arrangements discussed above facilitate rapid detection and accommodation of a higher than demanded fuel flow, thereby minimising the level of any engine overthrust. By measuring the metered flow, detection of a fault and UHT threat is fast. Unlike other systems, such detection does not rely on the slow outer engine control loop to detect a change in an engine parameter. Subsequent EEC control of flow can also be via a fast inner loop using measured flow feedback rather than relying on an engine parameter fed back via the slow outer loop. These arrangements are reliable and accurate because the metered flow measurement is direct (i.e. based on a measured flow) and is not inferred from other parameter measurements.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

**Claims**

1. A fuel metering system for a gas turbine engine (10), the fuel metering system comprising:

    a fuel supply line;
    a fuel metering valve (73) configured to pass an amount of fuel received from the fuel supply line to the gas turbine engine (10);
    an engine control unit (80) configured to control the position of the fuel metering valve (73) according to a demanded fuel flow to the gas turbine engine (10);
    a flow sensor (78) configured to provide a measurement of a flow of fuel in the fuel metering system;
    wherein the engine control (80) unit is further configured to determine a fuel flow to the gas turbine engine (10) based upon the measurement from the flow sensor (78) ; and
    wherein the engine control unit (80) is further configured to identify a loss of fuel flow control by comparing the demanded fuel flow to the determined fuel flow to the gas turbine engine (10).

2. The fuel metering system according to Claim 1, wherein the engine control unit (80) is configured to identify a loss of fuel flow control when the fuel flow measured by the flow sensor (78) exceeds the demanded fuel flow by a threshold amount.

3. The fuel metering system according to Claim 1 or Claim 2, further comprising:

> a spill line configured to receive excess fuel from the fuel supply line; and
> a spill valve (71) provided in the spill line and configured to control the flow of fuel through the spill line.

4. The fuel metering system according to Claim 3, wherein the engine control unit (80) is further configured to limit closure of the spill valve (71) in response to identifying a loss of fuel flow control.

5. The fuel metering system according to Claim 3 or Claim 4, further comprising a servo-valve (77) associated with the spill valve (71), and wherein the engine control unit (80) is configured to control the position of the spill valve (71) via the servo-valve (77).

6. The fuel metering system according to any one of the preceding claims, wherein the engine control unit (80) is further configured to close the fuel metering valve (73) in response to identifying a loss of fuel flow control.

7. The fuel metering system according to any one of the preceding claims, wherein the flow sensor (78) is configured to measure a flow of fuel downstream of the fuel metering valve (73).

8. The fuel metering system according to any one of the preceding claims, wherein the flow sensor (78) comprises a passive flow sensing valve configured to directly measure the downstream flow of fuel from the fuel metering valve (73).

9. The fuel metering system according to any one of the preceding claims, wherein the flow sensor (78) comprises a position sensor (79, 179) configured to determine the position of a valve downstream of the fuel metering valve 73).

10. The fuel metering system according to any one of Claims 1 to 6, wherein the flow sensor (78) is configured to measure a flow of fuel upstream of the fuel metering valve (73).

11. The fuel metering system according to Claim 13 when dependent from Claim 3 or any claim dependent therefrom, wherein the flow sensor (78) is configured to measure the fuel flow in the spill line.

12. A method of operating a fuel metering system for a gas turbine engine (10), the method comprising the steps of:

> controlling supply of fuel to a gas turbine engine (10) according to a demanded fuel flow;
> taking a measurement of a flow of fuel in the fuel metering system;
> determining a flow of fuel to the gas turbine engine based upon the measurement; and
> comparing the demanded fuel flow to the determined fuel flow.

13. The method according to Claim 12, further comprising the step of:
limiting a maximum fuel flow to the gas turbine engine in response to identifying that the determined fuel flow exceeds the demanded fuel flow by more than a threshold amount.

14. The method according to Claim 13, wherein the step of limiting comprises limiting the closure of a spill valve (71) in a spill line receiving excess fuel from the fuel supply line.

15. The method according to Claim 13 or Claim 14, wherein the step of limiting comprises closing a fuel metering valve (73) controlling the supply of fuel to the gas turbine engine.

Fig. 1

Fig. 2

Fig. 3

Fig. 4

Engine Parameter Demand

e.g. N1, EPR

+ −

Engine Parameter Error

Engine Control Laws

Fuel Flow Demand Wfdm

FMV Minor Loop Control

FMVSV Current I

Fuel Metering Unit (FMU) 70

MV Pos'n Feedback

Fuel Flow Wf

Engine 10

Integrator (K/s)

Engine Control Parameter

FMV Control Loop- 'Inner Loop'

Electronic Engine Control (EEC)

Engine Control Loop- 'Outer Loop'

80    82    81

# Fig. 5

LP    62    HP

FMV servo-valve 74

FMV 73    PX    PRSOV 76    PB → Engine 10

PDR 75

Spill valve    TCM servo valve 77

71

# Fig. 6

74

FMV
servo-valve

73

62

HP

FMV

PX

79

Pos'n
sensor

78

Flow sensing
Valve

PB

76

PRSOV

Engine 10

PDR

75

Spill valve

TCM servo
valve

71

77

# Fig. 7

74

FMV
servo-valve

73

62

HP

FMV

PX

76

PRSOV

PB

Engine 10

79

Pos'n
sensor

PDR

75

Flow sensing
Valve

Spill valve

TCM servo
valve

78

71

77

# Fig. 8

Fig. 9

Fig. 10

Europäisches
Patentamt

European
Patent Office

Office européen
des brevets

# EUROPEAN SEARCH REPORT

Application Number

EP 19 19 7543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/117102 A1 (WEIR KENNETH S [US] ET AL) 17 June 2004 (2004-06-17)<br>* figure 1 *<br>* paragraphs [0019], [0022], [0036] * | 1-8, 12-15 | INV.<br>F02C7/232<br>F02C9/26 |
| X | EP 1 138 933 A2 (LUCAS INDUSTRIES LTD [GB]) 4 October 2001 (2001-10-04)<br>* paragraphs [0027], [0030], [0031] *<br>* figure 2 * | 1,3,7-12 | |
| X | US 2017/321608 A1 (CROWLEY TIMOTHY J [US] ET AL) 9 November 2017 (2017-11-09)<br>* paragraphs [0037], [0038], [0045], [0056] *<br>* figures 2,3 * | 1-3,8,9, 11,12 | |
| X | US 2012/167594 A1 (POISSON RICHARD A [US] ET AL) 5 July 2012 (2012-07-05)<br>* paragraph [0023] *<br>* figure 3 * | 1,10,12 | |
| X | EP 3 228 847 A1 (UNITED TECHNOLOGIES CORP [US]) 11 October 2017 (2017-10-11)<br>* column 5, line 9 - line 34 *<br>* paragraphs [0022], [0034], [0037], [0043], [0047] *<br>* figure 2 * | 1-3,7,8, 12 | TECHNICAL FIELDS SEARCHED (IPC)<br><br>F02C |

The present search report has been drawn up for all claims

| Place of search | Date of completion of the search | Examiner |
|---|---|---|
| The Hague | 27 February 2020 | Angelucci, Stefano |

EPO FORM 1503 03.82 (P04C01)

**ANNEX TO THE EUROPEAN SEARCH REPORT
ON EUROPEAN PATENT APPLICATION NO.**

EP 19 19 7543

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2020

| Patent document cited in search report | | Publication date | Patent family member(s) | | Publication date |
|---|---|---|---|---|---|
| US 2004117102 | A1 | 17-06-2004 | AU 2003296951 A1 | | 09-07-2004 |
| | | | EP 1573184 A1 | | 14-09-2005 |
| | | | US 2004117102 A1 | | 17-06-2004 |
| | | | WO 2004055341 A1 | | 01-07-2004 |
| EP 1138933 | A2 | 04-10-2001 | EP 1138933 A2 | | 04-10-2001 |
| | | | US 2001052338 A1 | | 20-12-2001 |
| US 2017321608 | A1 | 09-11-2017 | EP 3284930 A1 | | 21-02-2018 |
| | | | US 2017321608 A1 | | 09-11-2017 |
| US 2012167594 | A1 | 05-07-2012 | GB 2487122 A | | 11-07-2012 |
| | | | US 2012167594 A1 | | 05-07-2012 |
| EP 3228847 | A1 | 11-10-2017 | EP 3228847 A1 | | 11-10-2017 |
| | | | US 2017292457 A1 | | 12-10-2017 |

EPO FORM P0459

For more details about this annex : see Official Journal of the European Patent Office, No. 12/82